# EUROPEAN PATENT APPLICATION

(11) **EP 2 273 110 A2**
(43) Date of publication of application: **12.01.2011**
(21) Application number: 10006700.8
(22) Date of filing: 29.06.2010
(51) Int. Cl.: F03D 11/00

(54) **Passive fire protection system for wind turbines**

(30) Priority: 30.06.2009 ES 200901510
(71) Applicant: Renovables Y Especiales, S.L., 50410 Cuarte de Huerva (Zaragoza) (ES)
(72) Inventor: de Cesare, Elsa Alejandra, 50410 Cuarte de Huerva (Zaragoza) (ES); Lopez Lacasta, Inmaculada, 50007 - Zaragoza (ES)
(74) Representative: Lehmann Novo, Maria Isabel

(57) **Abstract**

Passive fire protection system for wind turbines that consist of a tower, a base and a nacelle, which comprises a thermal barrier in the shape of a thermal blanket applied to the inner lining of the walls of certain compartments inside the nacelle of the wind turbine, such as the transformer compartment, the brake system compartment and others, with the peculiarity that the thermal blanket provides fire-resistance and low flammability properties.

## Description

### OBJECT OF THE INVENTION

The present invention relates to a passive fire protection system for wind turbines; its obvious aim is to prevent that the precipitation of molten metal and sparks from electrical connections and/or the friction of metal parts may cause an uncontrolled fire in the wind turbine by igniting any of the many types of combustible elements found in the said wind turbines, such as fibres or different sound insulation materials..

### BACKGROUND OF THE INVENTION

Different active fire protection systems are known and used in wind turbines. They are based, for example, on the rapid detection of smoke or heat in the origin and stabilization of a fire, and on extinguishing fires by smothering, cooling or inhibition of the combustion reaction.

These active systems have a complicated design and are complicated to use, as they require detectors, an electronic control system and the means to carry out fire suppression processes in the event of fire. All this leads to high investment requirements.

On the other hand, sometimes wind turbines include layers of soundproofing foam which, given their high flammability level, are liable to cause a high number of fires by providing fuel when the malfunction of the transformer, in a wind turbine, produces sparks or molten material, due to the possible high resistance in electric connections that may generate heat and the fusion of the said material.

A similar situation may occur in the area of the turbine disc brakes, where prolonged emergency braking may cause sparks generated by the mechanical contact between the brake callipers and disc, once the brake pads have worn, in such a way that any sparks generated in the braking system may ignite the sound-proofing foam placed on the sides of the wind turbine nacelle to reduce the spread of noise generated by the said turbine.

### DESCRIPTION OF THE INVENTION

The system advocated has been designed to solve the aforementioned problem, based on a simple, yet highly effective solution. The system, in its preferred embodiment, creates a protective layer that prevents the combustible materials present in a wind turbine from coming into direct contact with heat sources, thus inhibiting the initiation of combustion and preventing the loss of the entire wind turbine.

More specifically, the passive fire protection system is based on providing a thermal barrier formed preferably by a blanket based on a fire retardant fabric, which is placed in the areas or parts of the turbine that are to be protected, for example, the compartment of the three-phase electrical transformer.

Although the thermal blanket that constitutes the passive protection system is the best solution, another system could also be used as a protective barrier to prevent any heat source from igniting the wind turbine fibre layers.

In any case, the passive protection system also acts as a sound absorber and is especially suitable for environments in which the electrical and mechanical noise produced by wind turbine components can be annoying for the inhabitants of nearby areas.

It must also be stressed that the system related to this invention and, more specifically, the thermal blanket which comprises the same, offers excellent mechanical performance levels and can, therefore, be used in wind turbines that reach very high operating temperatures, where it may also act as thermal insulation preventing the spread of heat from solar radiation to the wind turbine.

The thermal blanket can be supplemented on one or on both sides with fire-retardant fabrics made of any material, which would provide a first line of protection against splashes of molten metal and would work as insulation to reduce the increase in temperature in the event of thermal contacts, preventing the blanket from fraying and affecting other wind turbine components.

Flame-resistant fabrics may be attached to the blankets by any conventional means suitable for this purpose, such as sewing, pressure, gluing, riveting, stapling or screwing them on, while the passive protection system may be attached to the relevant parts of the wind turbine which it is intended to protect by screws, sewing, gluing, rivets.. or a combination of the above-mentioned methods to ensure it is attached correctly, given the difficult working environment in terms of high temperatures and vibrations experienced in a wind turbine in operation.

The thermal blanket which comprises the passive protection system will have fire retardant and low flammability properties, it will provide high noise insulation and thermal break features and may be applied anywhere in the wind turbine where combustible materials may ignite if combined with a source of heat that is high enough to exceed the said materials' ignition point.

Based on the excellent sound-proofmg features of the passive protection system object of this invention, it would be possible to avoid the use of the sound-proofing foam products normally incorporated into conventional wind turbines; insulation foam that is used due to its low flash point and high self-extinguishing features but that, despite this, may be the cause of the origin of many of the fires that break out in wind turbines when the said material is ignited by sparks or molten material.

Finally, we must mention that the thermal blanket object of this invention can be manufactured with organic and inorganic materials and is mainly characterised by its high flame retardant properties, low flammability, low thermal conductivity, high structural strength at high temperatures and its high resistance to the precipitation of molten material..

### DESCRIPTION OF THE DRAWINGS

In order to complete the description that will be provided below and in order to understand the features of the invention better, based on an example of the preferred embodiment thereof, we have attached, as an integral part of this description, a set of illustrative drawings that represent, but are not limited to, the following:
Figure 1 .- This figure shows a general perspective view of a wind turbine that has been equipped with the passive protection system object of this invention.
Figure 2 .- This figure shows a detail of the section that corresponds to the nacelle of a wind turbine, namely the one shown in the figure above, where the protection system can be seen, for example, in the transformer compartment..

### PREFERRED EMBODIMENT OF THE INVENTION

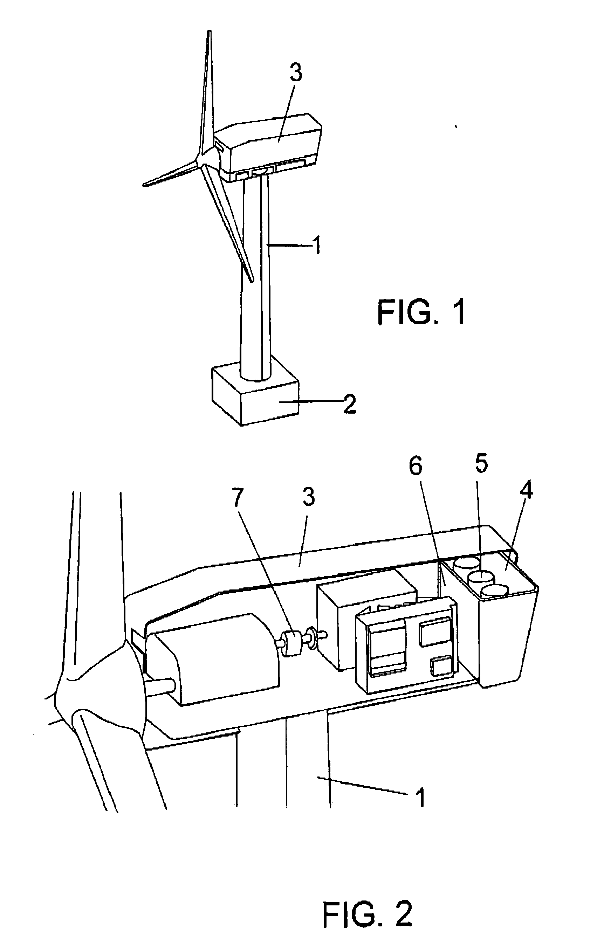

As can be seen in the figures mentioned, the passive protection system object of the invention is applicable to wind turbines that comprise a tower (1), base (2) and a nacelle (3) geometrically defined by modules manufactured in monolithic or core fibre , as can be seen in Figure 1. It presents the peculiarity that certain parts of the nacelle (3), specifically the compartment (4) of the transformer (5), are protected by a thermal blanket (6) forming a passive fire protection system, that has been reinforced by means of fire-resistant fabric that can be incorporated and fixed to one or both sides of the said thermal blanket (6), forming, in any case, a combustion ratio inhibitor by preventing any source of heat caused by any malfunction, of the transformer (5) for example, from igniting combustible elements found on the walls of the said compartment (4) of the said transformer (5) and whose combustible elements may include resins that impregnate the sound-proofing fibre or foam.

It has also been envisaged that the protection can be applied to other areas or parts of the wind turbine nacelle (3), such as the area corresponding to the location of the brake system (7); providing protection against fire, because such protection is applied against splashes or the effects of molten material, as well as attempting to reduce any rise in temperature.

Finally, we can mention that by combining the thermal blanket (6) with flame-resistant fabrics on one or both sides, the said combination will also provide sound-proofing properties, reducing the level of any mechanical and electrical noise which, produced by the working components inside the nacelle, is caused by the wind turbine, enabling the elimination of commonly used sound insulation foam, which, as mentioned earlier, is the cause of a high number of fires due to its high level of flammability, as it acts as a fuel when any malfunction in the transformer leads to the precipitation of sparks or molten material produced by the peaks of resistance generated by electrical connections and that result in heat generation and molten materials.

Obviously, the surface density, thickness and material of the thermal blanket (6) will depend on the fire protection sought and on the sound-proofing required in the compartment (4) of the three-phase transformer (5) and in the area or compartment of the wind turbine nacelle (3) that needs protecting..

## Claims

1. Passive fire protection system for wind turbines, which being applicable to the type of wind turbines that consist of a tower, a base and a nacelle, is **characterized by** comprising a thermal barrier in the shape of a thermal blanket applied to the inner lining of the walls of certain compartments inside the nacelle of the wind turbine, such as the transformer compartment, the brake system compartment and others, with the peculiarity that the thermal blanket provides fire-resistance and low flammability properties.

2. Passive fire protection system for wind turbines, according to claim 1, in which the thermal blanket applied to the walls of the compartments or areas to be protected in the nacelle, can incorporate permanent fire-proof fabrics on one or both sides, as a determining factor for preliminary protection against splashes of molten material and against high temperatures.

3. Passive fire protection system for wind turbines which, according to the previous claims, is **characterised by** the fact that the attachment of the thermal blanket to the walls of the compartment or area to be protected and the attachment of the fire-resistant fabric or fabrics to the thermal blanket, is performed by means of any conventional method, such as sewing, pressure, gluing, rivets, stapling or screws.

4. Passive fire protection system for wind turbines which, according to previous claims, is **characterised by** the fact that the thermal blanket in combination with the fire-resistant fabric or fabrics attached to it are made of both organic or inorganic materials, with excellent fire-resistance properties, low flammability and thermal conductivity levels, as well as high structural strength and resistance to the precipitation of molten materials on them.
